# EUROPÄISCHE PATENTANMELDUNG

(11) **EP 3 875 693 A1**
(43) Veröffentlichungstag der Anmeldung: **08.09.2021**
(21) Anmeldenummer: 21157802.6
(22) Anmeldetag: 18.02.2021
(51) Int. Cl.: E02F 3/36, E02F 3/96, E02F 9/20, B60L 1/00

(54) **MOBILE ARBEITSMASCHINE MIT EINEM ELEKTRISCHEN ARBEITSWERKZEUG**

(30) Priorität: 02.03.2020 DE 102020105431
(71) Anmelder: Weidemann GmbH, 34519 Diemelsee-Flechtdorf (DE)
(72) Erfinder: Geiger, Tom, 34225 Baunatal-Rengershausen (DE)
(74) Vertreter: Otten, Roth, Dobler & Partner mbB Patentanwälte

(57) **Zusammenfassung**

Es wird eine mobile Arbeitsmaschine (2), insbesondere Radlader, Teleskoplader, Bagger, Traktor oder dergleichen, mit einem Fahrzeugrahmen und mit einer Antriebseinheit zum Antreiben wenigstens eines Antriebsrades, wobei die Antriebseinheit zumindest einen Antriebsmotor und wenigstens einen elektrischen Energiespeicher (3, 13) zum Speichern elektrischer Energie umfasst, wobei wenigstens eine Werkzeughaltevorrichtung zum Halten eines lösbar verbindbaren Arbeitswerkzeugs (1) vorgesehen ist, wobei das Arbeitswerkzeug (1) wenigstens einen als Elektromotor (10) ausgebildeten Werkzeugmotor (10) zum Antrieben zumindest eines Werkzeugelementes (15, 16), insbesondere eines Kehrbesens, Mulchers, Greifarmes, Greifschaufel, Hebegabeln oder dergleichen, aufweist, vorgeschlagen, die wenigstens teilweise die Nachteile des Standes der Technik verbessert. Dies wird dadurch erreicht, dass wenigstens ein Werkzeug-Wechselrichter (5) zum Umwandeln von Gleichstrom/-spannung des elektrischen Energiespeichers (3) in Wechselstrom/-spannung vorgesehen ist und dass der Werkzeugmotor (10) als Wechselstrom-Motor oder Drehstrommotor (10) ausgebildet ist.

## Beschreibung

Die Erfindung betrifft eine mobile Arbeitsmaschine mit einem elektrischen Arbeitswerkzeug gemäß dem Oberbegriff des Anspruchs 1.

### Stand der Technik

Mobile Arbeitsmaschine, insbesondere Radlader, Teleskoplader, Bagger, Traktor oder dergleichen, mit einem Fahrzeugrahmen und mit einer Antriebseinheit zum Antreiben wenigstens eines Antriebsrades, werden heutzutage meist mit einem nachfüllbaren Kraftstoff betrieben. Dabei kommen heute hauptsächlich dieselgetriebene Fahrzeuge zum Einsatz. Zwischenzeitlich sind bereits elektrisch angetriebene Maschinen im Einsatz.

Üblicherweise weisen diese mobilen Arbeitsmaschinen lösbar verbindbare Arbeitswerkzeuge auf, z.B. die mittels sog. "Schnellwechslern" bzw. "Wechselplatten" gehalten bzw. gelöst werden. Hierbei existieren neben "passiven" Arbeitswerkzeugen wie Schaufel, Ballen-Gabel oder dergleichen auch Arbeitswerkzeuge wie ein Kehrbesen, Mulcher, Greifarme, Greifschaufel, Hebegabeln oder dergleichen, die entsprechend ein "aktives" bzw. mit Energie antreibbares Werkzeug aufweisen.

Bislang umfassen diese "aktiven" Werkzeuge meistens ein reines hydraulisches System mit einem hydraulischen Anschluss zum Fahrzeug und mit einem hydraulischen Aktor. Jedoch sind bereits auch bei elektrisch betriebenen, mobilen Arbeitsmaschinen Werkzeuge mit als Elektromotor ausgebildeten Werkzeugmotor bekannt. In der DE 20 2014 000 738 U1 ist eine derartige Arbeitsmaschine beschrieben, wobei der elektrische Arbeitsantrieb bzw. -Motor eine Hydraulikpumpe antriebt, um das hydraulische Werkzeug betrieben zu können.

Nachteilig bei bisher bekannten mobilen Arbeitsmaschinen ist der vergleichsweise schlechte Gesamtwirkungsgrad des hydraulischen oder auch des elektrisch-hydraulischen Systems zum Betreiben eines "aktiven" Arbeitswerkzeuges.

Gegenüber einem hydraulischen Systems zum Antreiben eines "aktiven" Arbeitswerkzeuges wiesen die rein elektrischen Systeme eine schlechte Steuer- bzw. Regelbarkeit auf.

### Aufgabe und Vorteile der Erfindung

Aufgabe der Erfindung ist es demgegenüber, eine mobile Arbeitsmaschine mit einem elektrischen Arbeitswerkzeug vorzuschlagen, die wenigstens teilweise die Nachteile des Standes der Technik verbessert.

Diese Aufgabe wird, ausgehend von einer mobilen Arbeitsmaschine mit einem elektrischen Arbeitswerkzeug der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße mobile Arbeitsmaschine mit einem elektrischen Arbeitswerkzeug dadurch aus, dass wenigstens ein Werkzeug-Wechselrichter zum Umwandeln von Gleichstrom/-spannung des elektrischen Energiespeichers in Wechselstrom/-spannung vorgesehen ist und dass der Werkzeugmotor als Wechselstrom-Motor oder Drehstrommotor ausgebildet ist.

Mit Hilfe einer derartigen, mobilen Arbeitsmaschine mit einem elektrischen Arbeitswerkzeug gemäß der Erfindung wird erreicht, dass in vorteilhafter Weise das Arbeitswerkzeug regelbar bzw. steuerbar ist. So kann beispielsweise der Wechselstrom-Motor oder Drehstrommotor sehr gut mit unterschiedlichen Drehzahlen bzw. frequenzvariabel betrieben werden. Hierbei kann ein vergleichsweise guter Wirkungsgrad und somit eine hohe Energieeffizienz verwirklicht werden. Gegenüber hydraulischen Systemen bzw. Hydraulikpumpen/-motoren etc. können ggf. um 40-50% geringere Energieverluste verwirklicht werden. Entsprechend wirtschaftlich und energetisch günstig ist eine erfindungsgemäße Arbeitsmaschine.

Vorteilhafterweise umfasst wenigstens das Arbeitswerkzeug den Werkzeug-Wechselrichter. So kann das Arbeitswerkzeug in vorteilhafter Weise Gleichstrom vom Arbeitsfahrzeug, insb. von dessen elektrischem Speicher bzw. der Batterie/Akku erhalten, wobei dieser im/vom Arbeitswerkzeug/Anbaugerät in einen ein- oder mehr-, insb. dreiphasigen Wechselstrom für den erfindungsgemäßen Wechselstrom-Motor oder Drehstrommotor umformbar ist.

In einer besonderen Weiterbildung umfasst wenigstens der Fahrzeugrahmen den Werkzeug-Wechselrichter. So kann das Arbeitsfahrzeug, insb. von dessen elektrischem Speicher bzw. der Batterie/Akku, in vorteilhafter Weise Gleichstrom in einen ein- oder mehr-, insb. dreiphasigen Wechselstrom für den erfindungsgemäßen Wechselstrom-Motor oder Drehstrommotor des Arbeitswerkzeuges umformen und diesem mit Hilfe von Wechselstrom-Leitungen zuführen.

Vorzugsweise ist wenigstens ein Werkzeug-Umrichter zum Verändern zumindest einer Werkzeug-Frequenz der Wechselspannung des Werkzeug-Wechselrichters vorgesehen. Diese Maßnahme ermöglicht eine vorteilhafte Frequenzveränderung/-steuerung des Arbeitswerkzeugs bzw. des Wechselstrom-Motors oder Drehstrommotors gemäß der Erfindung.

In einer Variante der Erfindung ist wenigstens eine in Bezug auf den Fahrzeugrahmen um eine (im Wesentlichen horizontal ausgerichtete) Schwenkachse verschwenkbare Tragvorrichtung vorgesehen, insbesondere als vertikal verstellbarer/verschwenkbarer Tragarm und/oder Teleskopausleger und/oder Dreipunkt-Hebevorrichtung ausgebildet. Somit ist die mobile Arbeitsmaschine als Bagger, Teleskoplader oder dergleichen in vorteilhafter Weise ausbildbar.

Vorteilhafterweise weist die Tragvorrichtung wenigstens einen als Elektromotor ausgebildeten Tragmotor zum Verschwenken/Verstellen und/oder Anheben/Absenken der Tragvorrichtung auf. So kann gemäß der Erfindung das Verschwenken/Verstellen elektromotorisch erfolgen.

In einer bevorzugten Variante der Erfindung ist eine Transportstellung vorgesehen, wobei das Arbeitswerkzeug vom Boden beabstandet ist. Das bedeutet, dass in vorteilhafter Weise das Arbeitswerkzeug in der Transportstellung ohne Bodenkontakt ist bzw. in einer angehobenen Transport- bzw. Tragestellung angeordnet ist. So ist zumindest für die angehobene Transportstellung kein Laufrad für die Straße oder dergleichen notwendig. Beispielsweise ist dies bei Arbeitswerkzeugen, die z.B. als Greiferschaufeln, querverstellbaren Gabeln oder dergleichen ausgebildet sind, von Vorteil.

Jedoch kann in vorteilhafter Weise für eine Arbeitsstellung, insbesondere eine abgesenkte Arbeitsstellung, wenigstens ein Arbeitsrad zum Laufen auf dem Boden bzw. der Straße, auf einem Werksgelände, Parkplatz, auf einem Gebäude-/Hallenboden oder dergleichen vorgesehen werden. Hierbei ist im Sinn der Erfindung das Arbeitsrad als Abstandshalter bzw. Abstandseinstellung ausgebildet, um z.B. bei einem Kehrbesen als Arbeitswerkzeug gemäß der Erfindung eine definierte, vorteilhafte Arbeitshöhe des Arbeitselementes wie z.B. des/der rotierenden Besenelementes bzw. Bürste zu gewährleisten. Dieses Arbeitsrad ist jedoch nicht für schnelle Fahrten/Transporte auf der Straße mit z.B. 20 bis 100 km/h geeignet. Vielmehr ist das Arbeitsrad für kleine Arbeits-Geschwindigkeiten geeignet.

Alternativ oder in einer Kombination zur vorgenannten Variante der Erfindung ist der Werkzeugmotor nicht als Laufradantriebsmotor ausgebildet. So ist der Werkzeugmotor im Sinn der Erfindung nicht als Antriebsmotor eines Laufrades für das Antreiben des Arbeitswerkzeuges und/oder der Arbeitsmaschine ausgebildet. Dementsprechend ist im Sinn der Erfindung das Werkzeug kein antreibbares Laufrad des Arbeitswerkzeuges.

In einer besonderen Weiterbildung der Erfindung ist wenigstens eine Hydraulikpumpe mit einem als Elektromotor ausgebildeten Pumpenmotor vorgesehen. Hiermit wird erreicht, dass ggf. herkömmliche, hydraulische Arbeitswerkzeuge verwendbar sind. Dies erhöht die Kompatibilität mit den bereits im Handel befindlichen Arbeitswerkzeugen bzw. verbessert die Nachrüstbarkeit und die Wirtschaftlichkeit.

Vorteilhafterweise ist/sind neben dem Werkzeug-Wechselrichter zudem ein Antriebs-Wechselrichter für den Antriebsmotor und/oder ein Tragvorrichtungs-Wechselrichter für den Tragmotor und/oder ein Pumpen-Wechselrichter für den Pumpenmotor vorgesehen. So kann die mobile Arbeitsmaschine bis zu drei unterschiedliche/separate Wechselrichter umfassen. Entsprechend kann für eine "Übergangszeit des Marktes", z.B. in den nächsten 10 Jahren, mit zum Teil hydraulischen Komponenten/Werkzeugen ein flexibler Einsatz der erfindungsgemäßen Arbeitsmaschine verwirklicht werden.

Vorzugsweise ist/sind neben dem Werkzeug-Umrichter zudem ein Antriebs-Umrichter zum Verändern zumindest einer Antriebs-Frequenz der Wechselspannung des Antriebs-Wechselrichters und/oder ein Tragvorrichtungs-Umrichter zum Verändern zumindest einer Tragvorrichtungs-Frequenz der Wechselspannung des Tragvorrichtungs-Wechselrichters und/oder ein Hydraulik-Umrichter zum Verändern zumindest einer Pumpen-Frequenz der Wechselspannung des Pumpen-Wechselrichters vorgesehen. Hiermit kann eine vorteilhafte Frequenzveränderung/-steuerung gemäß der Erfindung realisier werden.

In einer bevorzugten Ausführungsform der Erfindung ist wenigstens eine Steckereinheit zum lösbaren Verbinden zumindest einer ersten, elektrischen Stromleitung des Arbeitswerkzeugs mit einer zweiten, elektrischen Stromleitung des Fahrzeugrahmens und/oder der Tragvorrichtung vorgesehen. Hiermit kann in vorteilhafter Weise die elektrische Energieübertragung und/oder elektrische Signalübertragung zwischen Fahrzeug/Fahrzeugrahmen und Arbeitswerkzeug verwirklicht werden.

Grundsätzlich kann die Erfindung die Vorteile bzw. vorteilhafte Funktionen aufweisen, die einzeln oder in Kombination miteinander verwirklicht werden können:
- Anbauwerkzeuge mit regelbaren Drehstrommaschinen oder elektronisch kommutierter Motor,
- Exakte Steuerung des Anbauwerkzeugs durch frequenzvariablen Wechselrichter bzw. Kommutierungselektronik,
- Steuerung der Leistungselektronik über Kommunikationsschnittstelle,
- Steckersystem für Energie und/oder Signalübertragung,
- Möglichkeit von z.B. Sanftanlauf, Drehzahlerhöhung, Lastfühligkeit, Fehlererkennung und/oder
- Effizienzsteigerung.

Gemäß der Erfindung kann in vorteilhafter Weise ein Betrieb von drehzahlvariablen, elektrischen Werkzeugen an/von einer Arbeitsmaschine mit elektrischen Energiespeicher verwirklicht werden.

Die erfindungsgemäße mobile Arbeitsmaschine weist u.a. nachfolgende Merkmale bzw. Vorteile auf, die einzeln oder in Kombination miteinander verwirklicht werden können:
- Steuerung der Anbaugeräte vom Fahrerstand aus,
- Energie für das Anbaugerät kommt aus der Traktionsbatterie der Arbeitsmaschine,
- die Verwendung mindestens eines frequenzvariablen Wechselrichters,
- die Verwendung einer Kommunikationsschnittstelle zwischen Anbaugerät und Arbeitsmaschine,
- die Verwendung einer Überstromschutzeinrichtung der Batterie und/oder
- die Verwendung eines Stecksystems für Energie und Kommunikationsleitung.

Generell sind verschiedene Motorvarianten und Anordnungen denkbar. Beispielsweise sind Drehstrommotoren oder EC-Motoren von Vorteil. Diese EC-Motoren sind vorteilhafte Drehstrommotoren in synchroner Ausführung mit integrierter Ansteuerung (Kommutierungselektronik) .

Grundsätzlich ist gemäß der Erfindung ein elektrischer Direktantrieb von Werkzeugen von Vorteil. So können in vorteilhafter Weise weniger Verluste als beim hydraulischen Antrieb, längere Laufzeiten, eine Geschwindigkeitsregelung der Motoren, eine Momentenregelung (Stromregelung) und/oder eine Lageregelung (z.B. inkrementell oder mittels Endschalter) realisiert werden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: einen schematischen Aufbau einer ersten mobilen Arbeitsmaschine mit Arbeitswerkzeug gemäß der Erfindung und
- Figur 2: ein schematischen Aufbau einer zweiten mobilen Arbeitsmaschine mit Arbeitswerkzeug gemäß der Erfindung.

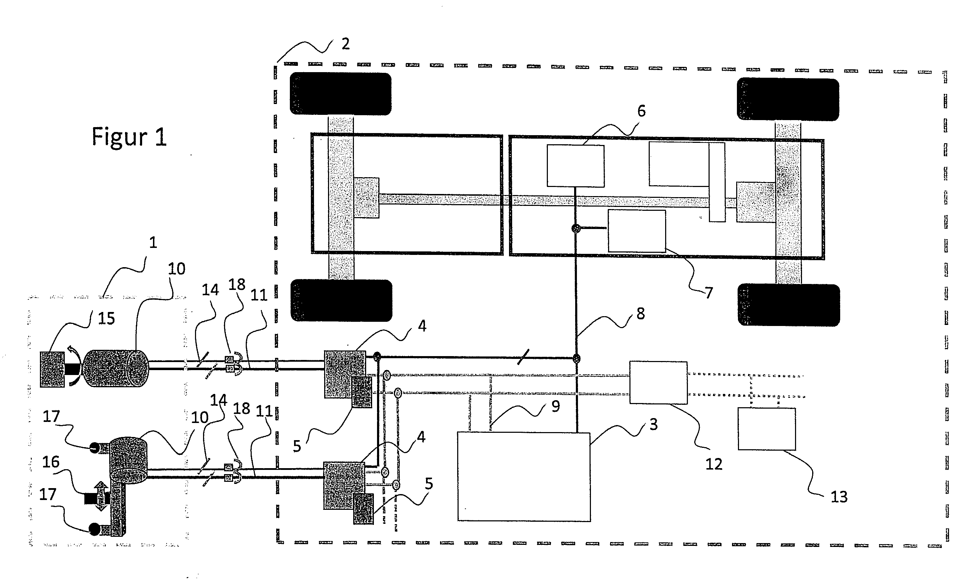

In Figur 1 ist eine erste Variante abgebildet, wobei ein Arbeitswerkzeug 1 bzw. Anbauwerkzeug 1, z.B.: Kehrmaschine, Mulcher, Greifschaufel, usw. mit (1-3 phasigen) Wechselstrommotoren 10 betrieben wird. Die Wechselstrommotoren 10 werden von mindestens einem fahrzeugseitig verbauten (1-3 phasigen) Wechselrichter 5 betrieben.

Der Wechselrichter 5 ist an eine Traktionsbatterie 3 und an einen Kommunikationsbus 8 angeschlossen. Der Wechselrichter 5 wird von einem Steuergerät 7 angesteuert. Die Steuerung der Anbauwerkzeuge 1 erfolgt aus einem Fahrerstand mittels Bedienerschnittstelle 6 (Schalter/ Dreh-Drück-Steller/Daumenrad/Potentiometer etc.). Aus dem Fahrerstand können die Werkzeuge 1 bedient werden. Hierbei können in vorteilhafter Weise optionale Funktionen verwirklicht werden: Drehzahlen vorwählen (für Kehrmaschine, Mulcher) und lineare Bewegungen gesteuert werden (Greifschaufel u.s.w.) Drehzahl, Lage bzw. Endlage der Aktoren werden über Sensoren am Werkzeug eingelesen und im Wechselrichter oder im Fahrzeugsteuergerät verarbeitet.

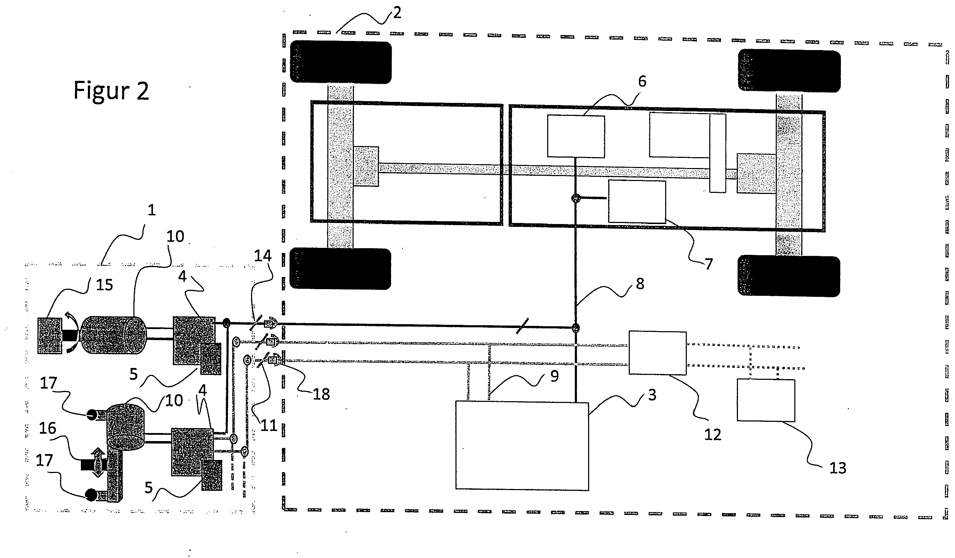

In Figur 2 ist eine zweite Variante abgebildet, wobei das Arbeitswerkzeug 1 bzw. Anbauwerkzeug 1, z.B.: Kehrmaschine, Mulcher, Greifschaufel, usw. vom Fahrzeug 2 mit Gleichstrom aus der Batterie versorgt wird. Die Wechselstrommotoren 10 des Arbeitswerkzeugs 1 werden von mindestens einem werkzeugseitig verbauten (1-3 phasigen) Wechselrichter 5 betrieben.

Der/die Wechselrichter 5 ist/sind an die Traktionsbatterie 3 und an den Kommunikationsbus 8 angeschlossen. Der Wechselrichter 5 wird von einem Steuergerät 7 angesteuert. Die Steuerung der Anbauwerkzeuge 1 erfolgt aus dem Fahrerstand mittels Bedienerschnittstelle 6 (Schalter/ Dreh-Drück-Steller/Daumenrad/Potentiometer) .

Wiederum können aus dem Fahrerstand die Werkzeuge 1 bedient werden. Hierbei können in vorteilhafter Weise optionale Funktionen verwirklicht werden: Drehzahlen vorwählen (für Kehrmaschine, Mulcher) und lineare Bewegungen gesteuert werden (Greifschaufel u.s.w.) Drehzahl, Lage bzw. Endlage der Aktoren werden über Sensoren am Werkzeug eingelesen und im Wechselrichter oder im Fahrzeugsteuergerät verarbeitet.

Im Allgemeinen können beispielsweise wenigstens eine/ein elektr. Batterie bzw. Akkumulator, z.B. ggf. mit 24V, 48V oder 96V oder dergleichen, sowie ein Umrichter und wenigstens ein Drehstrommotor eingesetzt werden.

### Bezugszeichenliste

- 1: Arbeitsgerät
- 2: Fahrzeug
- 3: elektrischer Energiespeicher
- 4: Wechselrichter
- 5: Steuereinheit Wechselrichter
- 6: Mensch-Maschine-Schnittstelle
- 7: Maschinensteuerung
- 8: Kommunikationsleitungen
- 9: Gleichstromleitungen
- 10: Drehstrommaschine
- 11: Energieleitungen
- 12: Gleichstromwandler
- 13: Sekundärer elektrischer Energiespeicher
- 14: Signalleitungen
- 15: rotierendes Werkzeug
- 16: Hubwerkzeug
- 17: Positionserfassung
- 18: Stecksystem

## Patentansprüche

1. Mobile Arbeitsmaschine (2), insbesondere Radlader, Teleskoplader, Bagger, Traktor oder dergleichen, mit einem Fahrzeugrahmen und mit einer Antriebseinheit zum Antreiben wenigstens eines Antriebsrades, wobei die Antriebseinheit zumindest einen Antriebsmotor und wenigstens einen elektrischen Energiespeicher (3, 13) zum Speichern elektrischer Energie umfasst, wobei wenigstens eine Werkzeughaltevorrichtung zum Halten eines lösbar verbindbaren Arbeitswerkzeugs (1) vorgesehen ist, wobei das Arbeitswerkzeug (1) wenigstens einen als Elektromotor (10) ausgebildeten Werkzeugmotor (10) zum Antrieben zumindest eines Werkzeugelementes (15, 16), insbesondere eines Kehrbesens, Mulchers, Greifarmes, Greifschaufel, Hebegabeln oder dergleichen, aufweist, **dadurch gekennzeichnet, dass** wenigstens ein Werkzeug-Wechselrichter (5) zum Umwandeln von Gleichstrom/- spannung des elektrischen Energiespeichers (3) in Wechselstrom/- spannung vorgesehen ist und dass der Werkzeugmotor (10) als Wechselstrom-Motor oder Drehstrommotor (10) ausgebildet ist.

2. Arbeitsmaschine nach Anspruch 1, **dadurch gekennzeichnet, dass** wenigstens das Arbeitswerkzeug (1) den Werkzeug-Wechselrichter (5) umfasst.

3. Arbeitsmaschine nach einem der vorgenannten Ansprüche, **dadurch gekennzeichnet, dass** wenigstens der Fahrzeugrahmen den Werkzeug-Wechselrichter (5) umfasst.

4. Arbeitsmaschine nach einem der vorgenannten Ansprüche, **dadurch gekennzeichnet, dass** wenigstens ein Werkzeug-Umrichter zum Verändern zumindest einer Werkzeug-Frequenz der Wechselspannung des Werkzeug-Wechselrichters (5) vorgesehen ist.

5. Arbeitsmaschine nach einem der vorgenannten Ansprüche, **dadurch gekennzeichnet, dass** wenigstens eine in Bezug auf den Fahrzeugrahmen um eine Schwenkachse verschwenkbare Tragvorrichtung, insbesondere Tragarm und/oder Teleskopausleger und/oder Dreipunkt-Hebevorrichtung, vorgesehen ist.

6. Arbeitsmaschine nach einem der vorgenannten Ansprüche, **dadurch gekennzeichnet, dass** die Tragvorrichtung wenigstens einen als Elektromotor ausgebildeten Tragmotor zum Verschwenken der Tragvorrichtung aufweist.

7. Arbeitsmaschine nach einem der vorgenannten Ansprüche, **dadurch gekennzeichnet, dass** wenigstens eine Hydraulikpumpe mit einem als Elektromotor ausgebildeten Pumpenmotor vorgesehen ist.

8. Arbeitsmaschine nach einem der vorgenannten Ansprüche, **dadurch gekennzeichnet, dass** neben dem Werkzeug-Wechselrichter (5) zudem ein Antriebs-Wechselrichter für den Antriebsmotor und/oder ein Tragvorrichtungs-Wechselrichter für den Tragmotor und/oder ein Pumpen-Wechselrichter für den Pumpenmotor vorgesehen ist/sind.

9. Arbeitsmaschine nach einem der vorgenannten Ansprüche, **dadurch gekennzeichnet, dass** neben dem Werkzeug-Umrichter zudem ein Antriebs-Umrichter zum Verändern zumindest einer Antriebs-Frequenz der Wechselspannung des Antriebs-Wechselrichters und/oder ein Tragvorrichtungs-Umrichter zum Verändern zumindest einer Tragvorrichtungs-Frequenz der Wechselspannung des Tragvorrichtungs-Wechselrichters und/oder ein Hydraulik-Umrichter zum Verändern zumindest einer Pumpen-Frequenz der Wechselspannung des Pumpen-Wechselrichters vorgesehen ist/sind.

10. Arbeitsmaschine nach einem der vorgenannten Ansprüche, **dadurch gekennzeichnet, dass** wenigstens eine Steckereinheit (18) zum lösbaren Verbinden zumindest einer ersten, elektrischen Stromleitung des Arbeitswerkzeugs mit einer zweiten, elektrischen Stromleitung (11) des Fahrzeugrahmens und/oder der Tragvorrichtung vorgesehen ist.

11. Arbeitswerkzeug (1) für eine Arbeitsmaschine nach einem der vorgenannten Ansprüche mit einem als Wechselstrom-Motor (10) oder Drehstrommotor (10) ausgebildeten Werkzeugmotor (10) zum Antreiben eines Werkzeugelementes (15, 16).
